# EUROPÄISCHE PATENTSCHRIFT

(11) **EP 3 995 330 B1**
(45) Veröffentlichungstag und Bekanntmachung des Hinweises auf die Patenterteilung: **29.11.2023**
(21) Anmeldenummer: 21201006.0
(22) Anmeldetag: 05.10.2021
(51) Int. Cl.: B60G 17/052

(54) **DRUCKHALTEVENTIL FÜR EINE LUFTFEDER UND LUFTFEDER UMFASSEND DAS DRUCKHALTEVENTIL**
PRESSURE MAINTAINING VALVE FOR AN AIR SPRING AND AIR SPRING COMPRISING THE PRESSURE MAINTAINING VALVE
SOUPAPE DE MAINTIEN DE PRESSION POUR UN RESSORT PNEUMATIQUE ET RESSORT PNEUMATIQUE COMPRENANT LA SOUPAPE DE MAINTIEN DE PRESSION

(30) Priorität: 09.11.2020 DE 102020129491
(43) Veröffentlichungstag der Anmeldung: 11.05.2022
(73) Patentinhaber: Vibracoustic SE, 64293 Darmstadt (DE)
(72) Erfinder: WEBER, Michael, 21244 Buchholz (DE); MOOG, Erhard, 27419 Sittensen (DE)
(74) Vertreter: Patentanwälte Olbricht Buchhold Keulertz

(56) Entgegenhaltungen:
- EP-A2- 0 848 196
- DE-A1-102012 222 982
- FR-A- 1 053 358
- US-A- 1 330 397
- US-A- 1 809 127
- US-A- 4 827 976

## Beschreibung

Die Erfindung betrifft ein Druckhalteventil für eine Luftfeder und eine Luftfeder umfassend das Druckhalteventil.

Für die Federung von Kraftfahrzeugen können Luftfedern verwendet werden, deren Volumen mittels eines pneumatischen Systems eingestellt werden kann. Für die Niveauregulierung kann Luft in die Luftfeder eingebracht werden bzw. Luft aus der Luftfeder abgelassen werden. Zum Einbringen von Luft in die Luftfeder werden Einlassventile verwendet, die in eine Öffnung der Luftfeder eingesetzt sind. An die Einlassventile wird ein Schlauch gekoppelt, der eine pneumatische Verbindung zwischen einer Druckquelle und dem Ventil herstellt. Um einen Druckverlust in der Luftfeder zu vermeiden, werden Einlassventile verwendet, die automatisch schließen, wenn der Schlauch von den Einlassventilen entkoppelt wird.

Dazu ist aus DE 10 2007 034 581 B4 bekannt, einen Luftleitungsanschluss bereitzustellen, dass eine Zugangsöffnung für einen Füllraum aufweist, in dem ein Verschlussteil angeordnet ist. Das Verschlussteil verschließt die Zugangsöffnung und wird dazu mittels eines Rückstellelements an die Zugangsöffnung gedrückt. Bei Verbinden einer Luftleitung mit dem Luftleitungsanschluss wird die Luftleitung durch die Zugangsöffnung geführt und drückt das Verschlussteil gegen den Widerstand des Rückstellelements von der Zugangsöffnung weg. Damit wird die Zugangsöffnung geöffnet. Beim Entfernen der Luftleitung aus der Zugangsöffnung wird das Verschlussteil durch das Rückstellelement wieder an die Zugangsöffnung gedrückt und verschließt diese wieder. Diese Art von Ventilen benötigt einen großen radialen Bauraum. Mit zunehmender radialer Größe erhöhen sich die Anforderungen an die Passgenauigkeit der Dichtflächen sowie die Menge der eingesetzten Werkstoffe. Dadurch werden diese Ventile kostenintensiv.

US 4 827 976 A beschreibt eine Unterdruckverteilerdose mit einem Sauganschluss und mehreren Unterdruckanschlüssen. Dabei sind sämtliche Unterdruckanschlüsse mit nur bei eingesteckten Unterdruckleitungen geöffneten Rückschlagventilen versehen, wobei sowohl die Dichtungen des Dosengehäuses selbst als auch die der Unterdruckleitungen zum Dosengehäuse und die Ventildichtsitze der Rückschlagventile in eine allseitig zwischen zwei Gehäuseteilen eingespannte Membrandichtung integriert sind.

Aufgabe der Erfindung ist es daher, ein Druckhalteventil für eine Luftfeder bereitzustellen, das zumindest abschnittsweise wenig radialen Bauraum benötigt und kostengünstig ist.

Hauptmerkmale der Erfindung sind in den Ansprüchen 1 und 9 angegeben. Ausgestaltungen sind Gegenstand der Ansprüche 2 bis 8 und 10 bis 11.

In einem Aspekt betrifft die Erfindung ein Druckhalteventil für eine Luftfeder, wobei das Druckhalteventil umfasst: einen ersten Ventilkörper zur Anordnung in eine Öffnung einer Luftfeder, wobei der erste Ventilkörper eine Zugangsöffnung aufweist, die fluidkommunizierend mit einer Leitung verbindbar ist; einen mit dem ersten Ventilkörper verbundenen zweiten Ventilkörper, der eine Kammer umfasst, die fluidkommunizierend mit der Zugangsöffnung verbunden ist und mindestens eine fluidkommunizierend mit einer Luftfeder verbindbare seitliche Auslassöffnung aufweist; ein Rückstellelement zum Bereitstellen einer Vorspannung in Richtung der Zugangsöffnung, wobei das Rückstellelement außerhalb der Zugangsöffnung in der Kammer angeordnet ist; ein in der Kammer angeordnetes Verschlussteil; wobei das Verschlussteil aus einem Schließzustand, in dem die Zugangsöffnung verschlossen ist, gegen die Vorspannung in einen Öffnungszustand beweglich ist, in dem die Zugangsöffnung geöffnet ist; und ein Aktuatorteil mit einem Kopfabschnitt, einem Schaftabschnitt, der sich von dem Kopfabschnitt weg erstreckt, und mindestens einem Strömungskanal, der sich vom Kopfabschnitt zumindest teilweise entlang des Schaftabschnitts erstreckt, wobei der Kopfabschnitt auf einer von der Kammer weg weisenden Seite der Zugangsöffnung außerhalb der Zugangsöffnung angeordnet ist und einen größeren Durchmesser als die Zugangsöffnung aufweist, wobei der Schaftabschnitt durch die Zugangsöffnung in die Kammer beweglich angeordnet ist und das Aktuatorteil zum Bewegen des Verschlussteils aus dem Schließzustand ausgebildet ist, wenn eine auf den Kopfabschnitt entgegen der Vorspannung wirkende Kraft, die größer als die Vorspannung ist, das Aktuatorteil mit dem Schaftabschnitt aus der Zugangsöffnung in die Kammer bewegt.

Mit der Erfindung wird ein kostengünstiges Druckhalteventil bereitgestellt, das öffnet, wenn es mit einer Leitung soweit gekoppelt ist, dass die Leitung auf den Kopfabschnitt drückt und das sperrt, wenn die Leitung nicht auf den Kopfabschnitt drückt. Hierdurch kann die Luftleitung bereits vormontiert und in einer Leitungshaltevorrichtung geklemmt sein, ohne dass sie zu einer Öffnung des Ventils führt. Erst bei einem weiteren Einschieben, welches zu einem Herunterdrücken des Kopfabschnittes führt, wird das Druckhalteventil in den Öffnungszustand überführt. Dazu weist das Druckhalteventil eine Zugangsöffnung auf, die mit einer Kammer, in der mindestens eine seitliche Auslassöffnung angeordnet ist, verbindbar ist. Aus den Auslassöffnungen kann Luft in eine Luftfeder strömen, wenn das Druckhalteventil in die Öffnung einer Luftfeder montiert ist. Die Zugangsöffnung des Druckhalteventils kann mittels des Verschlussteils verschlossen werden. Das Verschlussteil wird dazu mittels eines Rückstellelements in Richtung der Zugangsöffnung in den Schließzustand, in dem das Verschlussteil die Zugangsöffnung verschließt, gedrückt. Das Rückstellelement ist damit in einer Einbausituation auf einer der Luftfeder zugewandten Seite angeordnet. Das Verschlussteil ist zwischen dem Rückstellelement und der Zugangsöffnung angeordnet. Das Verschlussteil schirmt daher das Rückstellelement von der durch das Druckhalteventil strömenden Luft ab. Da das Rückstellelement außerhalb der Zugangsöffnung in der Kammer angeordnet ist kann es nahezu beliebig groß dimensioniert werden, ohne den radialen Bauraum des Ventils im Abschnitt der Zugangsöffnung zu beeinflussen und in diesem Bereich zu einem großen radialen Durchmesser zu führen. Das Verschlussteil kann weiter mittels einer angekoppelten Leitung über das Aktuatorteil aus dem Schließzustand in den Öffnungszustand, in dem die Zugangsöffnung geöffnet ist, bewegt werden. Dazu erstreckt sich das Aktuatorteil durch die Zugangsöffnung und koppelt die Leitung mit dem Verschlussteil. Das Aktuatorteil weist einen Kopfabschnitt auf, der einen größeren Durchmesser als die Zugangsöffnung hat und außerhalb der Zugangsöffnung angeordnet ist. Damit kann der Kopfabschnitt nicht in die Zugangsöffnung eingeführt werden. Weiter ist der Kopfabschnitt ebenfalls außerhalb der Kammer auf der anderen Seite der Zugangsöffnung angeordnet. Ein Schaftabschnitt des Aktuatorteils erstreckt sich durch die Zugangsöffnung und kann, wenn eine Kraft auf den Kopfabschnitt wirkt, zum Betätigen des Verschlussteils in die Kammer hinein bewegt werden. An den Kopfabschnitt kann eine Leitung angekoppelt werden. Mit der Ankopplung kann mittels der Leitung eine Kraft auf den Kopfabschnitt bewirkt werden. Der Schaftabschnitt überträgt diese Kraft durch die Zugangsöffnung auf das Verschlussteil. Wenn die Kraft den Widerstand überwindet, den das Rückstellelement auf das Verschlussteil bewirkt, bewegt sich das Verschlussteil aus dem Sperrzustand in den Öffnungszustand. Die Leitung selbst wird dazu nicht durch die Zugangsöffnung geführt und hat keinen unmittelbaren Kontakt zu dem Verschlussteil. Da die Leitung nicht durch die Zugangsöffnung geführt werden muss, um das Verschlussteil zu betätigen, kann die Zugangsöffnung damit mit einem kleineren Durchmesser als die Leitung ausgebildet werden. Damit kann das gesamte Druckhalteventil mit einem reduzierten Platzbedarf ausgebildet werden. Das Aktuatorteil umfasst weiter mindestens einen Strömungskanal, der sich vom Kopfabschnitt zumindest teilweise entlang des Schaftabschnitts erstreckt. Damit schafft der Strömungskanal im Öffnungszustand entlang der Zugangsöffnung eine fluidkommunizierende Verbindung, zwischen der mit dem Kopfabschnitt gekoppelten Leitung und der Kammer. Die Zugangsöffnung selbst ist frei von Strömungskanälen, die Luft von der Leitung entlang des Aktuatorteils in die Kammer führen. Damit wird vermieden, dass die Zugangsöffnung durch zusätzliche Strömungskanäle vergrößert wird. Das Verschlussteil benötigt damit lediglich einen geringfügig größeren Durchmesser als die Zugangsöffnung, um sie verschließen zu können. Damit kann der Platzbedarf des Druckhalteventils weiter verringert werden. Durch den verringerten Platzbedarf werden die Kosten des Druckhalteventils ebenfalls reduziert. Weiter können die Komponenten des Druckhalteventils, mit Ausnahme des Verschlussteils, große Toleranzen aufweisen, ohne dass eine Beeinträchtigung ihrer Funktion erfolgt. Durch die Vergrößerung der Toleranzen bei der Fertigung insbesondere der Zugangsöffnung, des Aktuatorteils und des ersten und zweiten Ventilkörpers können bei der Herstellung des Druckhalteventils weitere Kosten eingespart werden. Wenn der zweite Ventilkörper mittels eines Spritzguss- oder Druckgussverfahrens hergestellt wird, werden für die Ausformung der seitlichen Auslassöffnungen keine Bohrungen benötigt. Stattdessen können die seitlichen Auslassöffnungen kostengünstig mittels Schiebern im Spritzguss- oder Druckgusswerkzeug hergestellt werden.

Gemäß einem Beispiel ist denkbar, dass der erste Ventilkörper, der zweite Ventilkörper und/ oder das Aktuatorteil aus Kunststoff oder einer Gusslegierung bestehen. Hierdurch bedarf es keiner oder nur geringer spanender bzw. mechanischer Nacharbeit der Komponenten.

Durch die großen Toleranzen, die durch die Erfindung ermöglicht werden, können Kunststoffe oder Gusslegierungen für die Komponenten des Druckhalteventils verwendet werden. Somit können die Kosten der Herstellung im Gegensatz weiter verringert werden.

In einem weiteren Beispiel können der erste Ventilkörper, der zweite Ventilkörper und/oder das Aktuatorteil Spritzguss- und/oder Druckgussteile sein.

Spritzguss- und/oder Druckgussteile sind regelmäßig sehr kostengünstig, insbesondere, wenn eine hohe Stückzahl erzeugt wird. Die Spritzguss- und/oder Druckgussteile können aus Kunststoff oder aus Metall, insbesondere Aluminium, bestehen.

Der erste Ventilkörper und der zweite Ventilkörper können beispielsweise mittels einer Schnappverbindung verbunden sein. Hierfür ist es von Vorteil, wenn der Ventilkörper mit den federnden Schnappelementen aus Kunststoff besteht.

Damit können der erste Ventilkörper und der zweite Ventilkörper separat voneinander hergestellt werden. Erst bei der Montage des Druckhalteventils können die beiden Ventilkörper mittels der Schnappverbindung miteinander verbunden werden. Die Schnappverbindung kann beispielsweise Schnapphaken aufweisen, so dass die beiden Ventilkörper bei dem Zusammenbau des Druckhalteventils lediglich zusammengesteckt werden müssen. Durch diese Vormontage kann das Druckhalteventil als Vormontageeinheit in einen Ventilsitz in einer Öffnung einer Luftfeder montiert werden. Auch alternative Verbindungsmöglichkeiten der beiden Ventilkörper sind denkbar wir beispielsweise eine Schraubverbindung, ein Bajonettverschluss, eine Ultraschall verschweißte Verbindung oder ein reib- bzw. kraftschlüssige Verbindung.

Weiter weist der Kopfabschnitt erfindungsgemäß mindestens eine Leitungskontaktfläche zum Anlegen eines Leitungsendstücks auf, die eine Teilfläche eines Rings ausbildet, wobei der Ring einen größeren Durchmesser aufweist als die Zugangsöffnung.

Der Ring weist damit ebenfalls einen größeren Durchmesser auf als der Schaftabschnitt. Eine rohrförmige Leitung, die mit einem Leitungsendstück an die Leitungskontaktfläche gekoppelt werden kann, ist damit nicht in die Zugangsöffnung einführbar. Die Öffnung einer Luftfeder, die mit der Leitung und dem Druckhalteventil koppelbar ist, kann damit einen Durchmesser aufweisen, der lediglich groß genug zum Aufnehmen und Halten einer Leitung bzw. einer Leitungshaltevorrichtung sein muss.

Weiter ist denkbar, dass der Schaftabschnitt zum Beispiel eine Stoßfläche aufweist, die zum Anlegen an das Verschlussteil ausgebildet ist.

Zwischen dem Aktuatorteil und dem Verschlussteil ist damit keine feste Verbindung vorhanden. Das Aktuatorteil kann daher insbesondere im Sperrzustand von dem Verschlussteil losgelöst entlang der Zugangsöffnung bewegt werden. Dies vereinfach die Herstellung des Druckhalteventils, da das Aktuatorteil lediglich mit dem Schaftabschnitt in die Zugangsöffnung eingeführt werden muss. Eine Kopplung der Stoßfläche mit dem Verschlussteil erfolgt automatisch, wenn mittels einer Leitung eine Kraft auf den Kopfabschnitt bewirkt wird.

In einem weiteren Beispiel kann sich der Strömungskanal außen an dem Aktuatorteil erstrecken.

Damit kann die Herstellung des Aktuatorteils weiter vereinfacht werden. Im Gegensatz zu einem Strömungskanal, der sich innerhalb des Aktuatorteils erstreckt, wird bei der Herstellung des au-ßen angeordneten Strömungskanals lediglich die äußere Form des Aktuatorteils angepasst. Das Aktuatorteil kann zum Beispiel vier Strömungskanäle umfassen, die sich außen an dem Aktuatorteil erstrecken und zusammen einen kreuzförmigen Querschnitt aufweisen.

Die vergrößerte Anzahl der Strömungskanäle vergrößert das mögliche Strömungsvolumen und reduziert den Strömungswiderstand des Aktuatorteils. Weiter weist das Aktuatorteil mit einem kreuzförmigen Querschnitt eine stabile und steife Form auf.

Weiter weist das Druckhalteventil erfindungsgemäß eine Verliersicherung für das Aktuatorteil auf, die zum Beschränken einer Bewegbarkeit des Schaftabschnitts in der Zugangsöffnung von der Kammer weg ausgebildet ist.

Eine Bewegung des Schaftabschnitts in Richtung des Kopfabschnitts aus der Zugangsöffnung heraus wird damit vermieden. Im Sperrzustand, in dem keine Leitung an das Druckhalteventil gekoppelt ist oder die Leitungshaltevorrichtung demontiert ist, wird damit verhindert, dass das Aktuatorteil aus der Zugangsöffnung entfernt werden und verloren werden kann. Dies erhöht die Betriebssicherheit des Druckhalteventils.

Die Verliersicherung weist mindestens ein erstes Schnapphakenelement, das an der Zugangsöffnung angeordnet ist, und mindestens ein zweites Schnapphakenelement, das am Schaftabschnitt angeordnet ist, auf.

Bei der Montage des Aktuatorteils in der Zugangsöffnung kann der Schaftabschnitt ein einem der Kammer gegenüber angeordneten Ende der Zugangsöffnung in die Zugangsöffnung eingeführt werden. Das zweite Schnapphakenelement ist dabei so angeordnet, dass es dann mit dem ersten Schnapphakenelement verrastet, wenn der Schaftabschnitt noch nicht in die Kammer eingeführt wird.

Weiter kann der erste Ventilkörper gemäß einem Beispiel ein Dichtelement zur Anlage an einen Wandabschnitt einer Öffnung einer Luftfeder aufweisen, das sich außen um den ersten Ventilkörper erstreckt.

Der erste Ventilkörper bewirkt mit dem Dichtelement eine Abdichtung der Öffnung einer Luftfeder, in die das Druckhalteventil eingesetzt ist, zur äußeren Umgebung, insbesondere wenn die Leitung und/oder die Leitungshaltevorrichtung demontiert ist.

In einem weiteren Aspekt betrifft die Erfindung eine Luftfeder umfassend eine Luftfederkammer mit einer Öffnung, wobei in einem ersten Teil der Öffnung, der zu der Luftfederkammer gerichtet ist, ein Druckhalteventil nach der vorangegangenen Beschreibung und in einem zweiten Teil der Öffnung, der von der Luftfederkammer weg gerichtet ist, eine Leitungshaltevorrichtung angeordnet ist.

Vorteile und Wirkungen sowie Weiterbildungen der Luftfeder ergeben sich aus den Vorteilen und Wirkungen sowie Weiterbildungen des oben beschriebenen Druckhalteventils. Es wird daher in dieser Hinsicht auf die vorangegangene Beschreibung verwiesen.

Gemäß einem Beispiel kann das Druckhalteventil zumindest teilweise, insbesondere mit mindestens einem Teil des zweiten Ventilkörpers, in die Luftfederkammer hineinragen. Dabei kann insbesondere ein Teil des zweiten Ventilkörpers, in dem das Rückstellelement angeordnet ist, in Gänze in die Luftfederkammer hineinragen.

Das Druckhalteventil benötigt damit nur innerhalb einer geringen axialen Erstreckungslänge einen Ventilsitz in der Öffnung der Luftfeder. Das Rückstellelement kann beliebig groß ausgebildet werden, da es mit dem zweiten Ventilkörper nicht in der Öffnung, sondern lediglich in der Luftfederkammer angeordnet wird. Dies vereinfacht die Montage des Druckhalteventils in der Luftfeder. Der zweite Ventilkörper kann in diesem Fall nach Montage des ersten Ventilkörpers in der Öffnung mit dem ersten Ventilkörper verbunden werden. Das Druckhalteventil wird in diesem Fall nicht vormontiert.

Weiter ist zum Beispiel denkbar, dass das Druckhalteventil durch die Leitungshaltevorrichtung in einer axialen Richtung der Öffnung fixiert ist.

Insbesondere, im Sperrzustand, wenn die Luftfeder unter Druck steht, wird das Druckhalteventil in der Öffnung der Luftfeder gesichert. Die Leitungshaltevorrichtung verringert die Gefahr, dass das Druckhalteventil im Sperrzustand aus dem Inneren der Luftfeder in die Öffnung hineingedrückt oder auch durch die Öffnung aus der Luftfeder herausgedrückt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a-c: eine schematische Darstellung eines Druckhalteventils im Sperrzustand;
- Fig. 2: eine schematische Schnittdarstellung eines Druckhalteventils im Öffnungszustand;
- Fig. 3: eine schematische Darstellung eines ersten Ventilkörpers;
- Fig. 4a, b: eine schematische Darstellung eines zweiten Ventilkörpers; und
- Fig. 5a, b: eine schematische Darstellung eines weiteren Ausführungsbeispiels des Druckhalteventils.

Das Druckhalteventil wird im Folgenden in seiner Gesamtheit mit dem Bezugszeichen 10 referenziert.

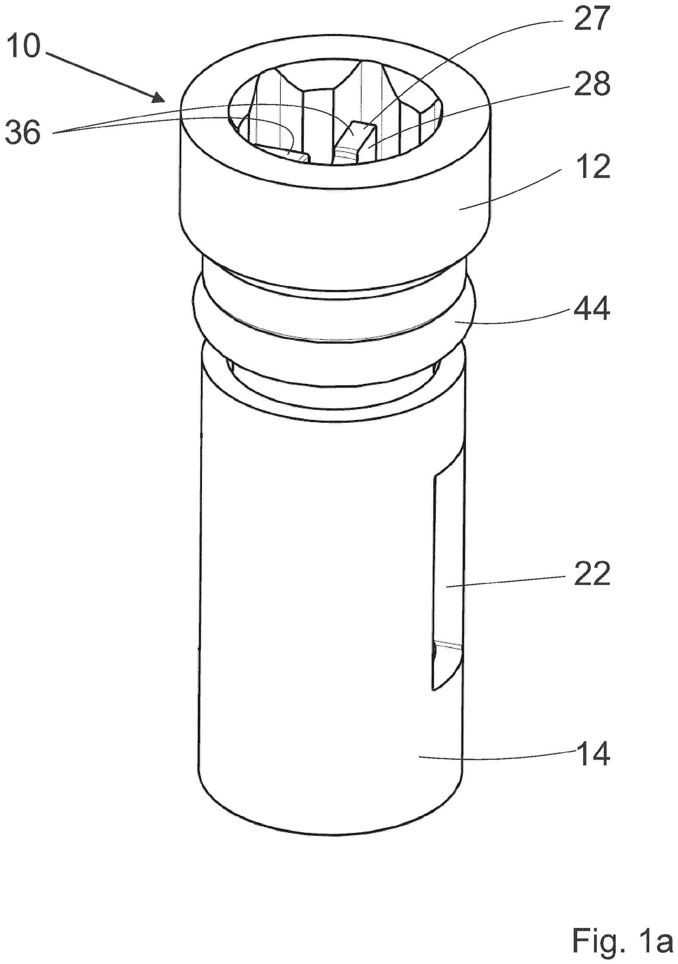

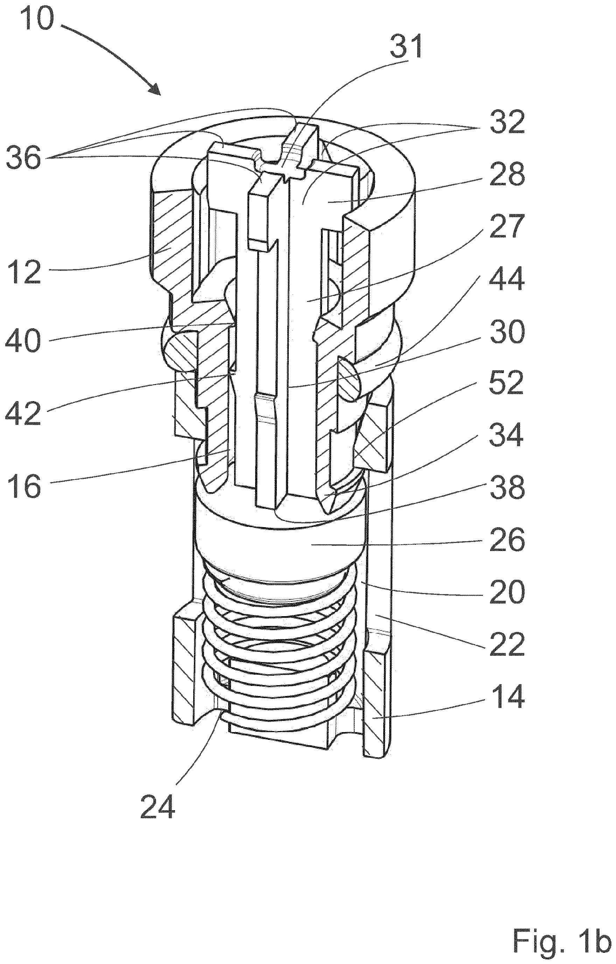

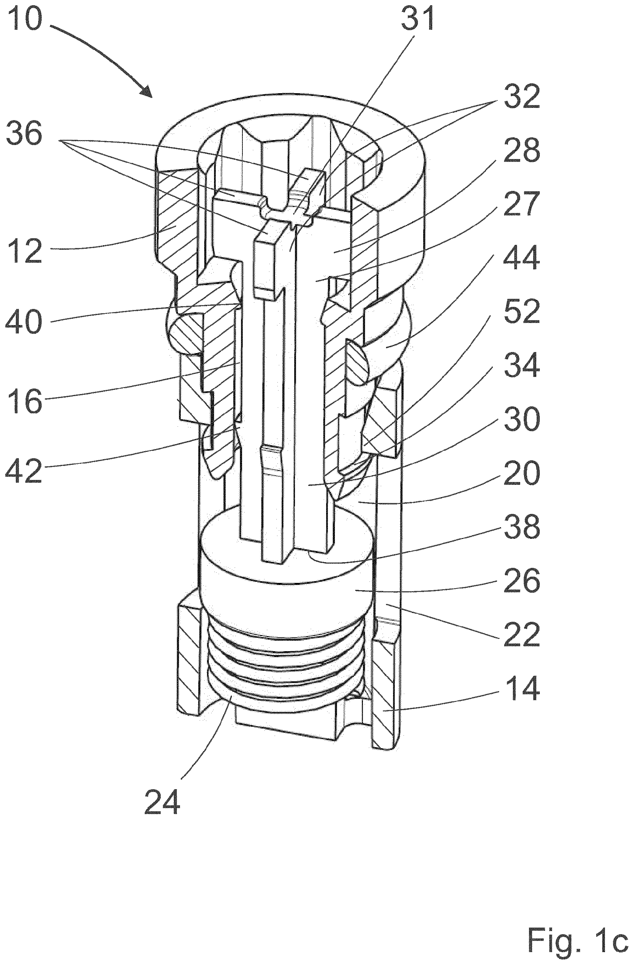

Die Figuren 1a, 1b und 1c zeigen das Druckhalteventil 10. Figur 1a stellt das Druckhalteventil 10 in seiner Gesamtheit dar. Gemäß Figur 1a weist das Druckhalteventil 10 einen ersten Ventilkörper 12 und einen zweiten Ventilkörper 14 auf.

In den Figuren 1b und 1c ist ein Teil des Druckhalteventils 10 nicht dargestellt, um eine Ansicht in das Innere der Ventilkörper 12 und 14 zu erhalten. Das Druckhalteventil 10 weist demnach weiter ein Rückstellelement 24, ein Verschlussteil 26 und ein Aktuatorteil 27 auf.

Der erste Ventilkörper 12 ist dazu ausgebildet, in eine Öffnung einer Luftfeder eingesetzt zu werden. Um den ersten Ventilkörper 12 erstreckt sich ein Dichtelement 44, das einen Zwischenraum zwischen der Öffnung der Luftfeder und dem ersten Ventilkörper 12 abdichtet.

Durch den ersten Ventilkörper 12 erstreckt sich eine Zugangsöffnung 16, die fluidkommunizierend mit einer Leitung verbunden werden kann. Die Leitung kann die Zugangsöffnung 16 mit einer Druckquelle verbinden, um Luft durch das Druckhalteventil 10 in die Luftfeder zu leiten. Das Druckhalteventil 10 ist dazu als Einlassventil ausgebildet.

Der erste Ventilkörper 12 ist mit einem zweiten Ventilkörper 14 verbunden, das eine Kammer 20 aufweist. Die Zugangsöffnung 16 mündet in die Kammer 20, die mindestens eine seitliche Auslassöffnung 22 aufweist. Die Verbindung der beiden Ventilkörper 12, 14 kann mittels einer Schnappverbindung bewirkt werden. Auch alternative Verbindungsmöglichkeiten der beiden Ventilkörper 12, 14 sind denkbar wie beispielsweise eine Schraubverbindung, ein Bajonettverschluss, eine Ultraschall verschweißte Verbindung oder ein reib- bzw. kraftschlüssige Verbindung. Dazu kann der erste Ventilkörper 12 ein erstes Schnapphakenteil 34 und der zweite Ventilkörper 14 ein zweites Schnapphakenteil 52 aufweisen. Die Schnapphakenteile 34, 52 sind derart ausgebildet, dass sie zusammengesteckt werden können, um den ersten Ventilkörper 12 mit dem zweiten Ventilkörper 14 zu verbinden. Das zweite Schnapphakenteil 52 kann an der seitlichen Auslassöffnung 22 angeordnet sein, so dass das erste Schnapphakenteil 34 beim Einrasten teilweise in der Auslassöffnung 22 angeordnet ist.

In der Kammer 20 ist das Verschlussteil 26 angeordnet. Das Verschlussteil 26 wird mittels eines Rückstellelements 24 gegen die Zugangsöffnung 16 gedrückt und sperrt bzw. verschließt die Zugangsöffnung 16, wie in Figur 1b dargestellt. In dieser Position ist das Verschlussteil 26 im Sperrzustand. Das Rückstellelement 24 ist in diesem Beispiel außerhalb der Zugangsöffnung 16 und ebenfalls in der Kammer 20 angeordnet. Es bewirkt eine Vorspannung in Richtung der Zugangsöffnung 16.

In der Zugangsöffnung 16 ist das Aktuatorteil 27 mit einem Schaftabschnitt 30 angeordnet, der sich von einem Kopfabschnitt 28 des Aktuatorteils 27 weg erstreckt. Der Kopfabschnitt 28 weist einen größeren Durchmesser als die Zugangsöffnung 16 auf und kann nicht in die Zugangsöffnung 16 eingeführt werden. Weiter ist die Zugangsöffnung 16 zwischen dem Kopfabschnitt 28 und der Kammer 20 angeordnet.

Entlang des Schaftabschnitts 30 erstreckt sich mindestens ein Strömungskanal 32. Der Strömungskanal 32 beginnt am Kopfabschnitt 28. In diesem Beispiel umfasst das Aktuatorteil 27 vier Strömungskanäle 32, die an einer Stirnfläche des Kopfabschnitts 26 beginnen. An der Stirnfläche kann eine Ausnehmung 31 angeordnet sein von der die Strömungskanäle 32 in Richtung des Schaftabschnitts 30 abgehen.

Das Aktuatorteil 27 ist beweglich entlang der Zugangsöffnung 16 angeordnet. Es kann mit dem Schaftabschnitt 30 derart durch die Zugangsöffnung 16 bewegt werden, dass der Schaftabschnitt 30 in die Kammer 20 hinein bewegt wird. Beim Hineinbewegen des Schaftabschnitts 30 in die Kammer 20 stößt eine Stoßfläche 38 des Schaftabschnitts 30 an eine Oberfläche des Verschlussteils 26. Wenn das Aktuatorteil 27 mit einer Kraft in Richtung der Kammer 20 bewegt wird, die größer ist als die Vorspannung des Rückstellelements 24, wird das Verschlussteil 26 von der Zugangsöffnung 16 weg in den Öffnungszustand bewegt. Dies ist in Figur 1c dargestellt.

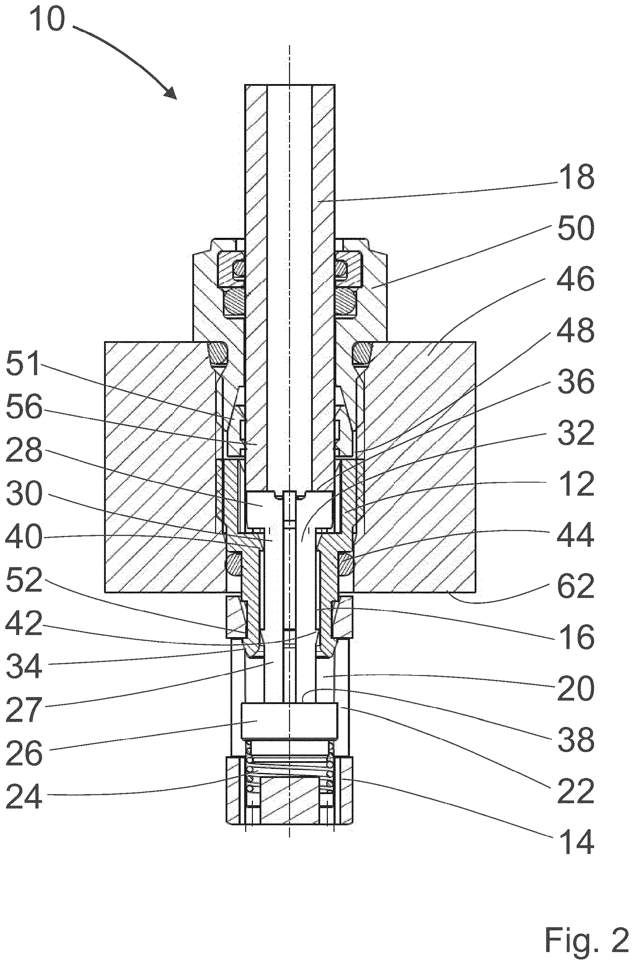

Diese Kraft kann gemäß Figur 2 mittels einer Leitung 18, die mit einem Leitungsendstück 56 an eine Leitungskontaktfläche 36 des Kopfabschnitts 28 gekoppelt wird, übertragen. In Figur 2 ist das Verschlussteil 26 im Öffnungszustand. Weiter ist ein Abschnitt einer Luftfeder 46 dargestellt, der eine Öffnung 48 umfasst. Das Druckhalteventil 10 ist in einem ersten Teil der Öffnung 48 angeordnet, der zu einer Luftfederkammer 62 der Luftfeder 46 gerichtet ist. In einem zweiten Teil der Öffnung 48, der von der Luftfederkammer 62 der Luftfeder 46 weg gerichtet ist, ist eine Leitungshaltevorrichtung 50 angeordnet. In diesem Beispiel kann eine Leitung 18 durch die Leitungshaltevorrichtung 50 geführt werden. Ein Haltering 51 verhindert eine Bewegung der Leitung 18 aus der Leitungshaltevorrichtung 50 hinaus. Dabei wird die Leitung 18 beim Einschieben in die Leitungshaltevorrichtung 50 von dieser bereits gehalten, bevor sie in Kontakt mit dem Kopfabschnitt 28 kommt. Die Leitung 18 kann in diesem Beispiel nur dann aus der Öffnung 48 entfernt werden, wenn die Leitungshaltevorrichtung 50 aus der Öffnung 48 entfernt wird.

Die Leitung 18 kann soweit durch die Leitungshaltevorrichtung 50 geführt werden, bis sie die Leitungskontaktfläche 36 des Aktuatorteils 27 kontaktiert. Die Leitungskontaktfläche 36 ist dabei eine Teilfläche eines Rings, der einen größeren Durchmesser als die Zugangsöffnung 16 aufweist. Ein weiteres Einführen der Leitung 18 mit einer Kraft, die größer als die Vorspannung des Rückstellelements 24 ist, bewirkt, dass das Aktuatorteil 27 mit dem Schaftabschnitt 30 das Verschlussteil 26 aus dem Sperrzustand in den Öffnungszustand bewegt.

Das Einführen der Leitung 18 erfolgt erst, nachdem die Leitungshaltevorrichtung 50 und das Druckhalteventil 10 in der Öffnung 48 montiert wurden.

Die Fixierung des Druckhalteventils 10 in der Öffnung 48 wird in diesem Beispiel mittels des ersten Ventilkörpers 12 bewirkt.

Wie in Figur 2 weiter dargestellt, ragt der zweite Ventilkörper 14 größtenteils aus der Öffnung 48 in die Luftfederkammer 62 der Luftfeder 46. Insbesondere ein Teil des zweiten Ventilkörpers 14, in dem das Rückstellelement 24 angeordnet ist, ragt in die Luftfederkammer 62. Die seitlichen Auslassöffnungen 22 sind fluidkommunizierend mit der Luftfederkammer 62 verbunden. Im Öffnungszustand besteht eine fluidkommunizierende Verbindung zwischen der Luftfederkammer 62 und der Leitung 18 über die seitlichen Auslassöffnungen 22, die Kammer 20 und die Zugangsöffnung 16 bzw. den Strömungskanälen 32. Das Rückstellelement 24 ist im Wesentlichen außerhalb einer Luftströmung, die entlang der fluidkommunizierenden Verbindung fließt, angeordnet. Es wird durch das Verschlussteil 26 von der Luftströmung abgeschirmt.

Um eine Bewegung des Aktuatorteils 27 aus der Zugangsöffnung 16 hinaus zu verhindern, umfasst das Druckhalteventil 10 eine Verliersicherung für das Aktuatorteil 27. Die Verliersicherung weist an der Zugangsöffnung 16 ein erstes Schnapphakenelement 40 auf. Am Schaftabschnitt 30 weist die Verliersicherung ein zweites Schnapphakenelement 42 auf. Die Schnapphakenelemente 40, 42 sind so ausgebildet, dass sie gegeneinander lediglich in Richtung der Kammer 20 bewegt werden können, nachdem das zweite Schnapphakenelement 42 die Position des ersten Schnapphakenelements 40 passiert hat. Eine Bewegung entgegen dieser Richtung wird nach dem das Aktuatorteil 27 mit dem Schaftabschnitt 30 in die Zugangsöffnung 16 eingeführt wurde, blockiert, sobald das zweite Schnapphakenelement 42 mit dem Schaftabschnitt 30 an die Position des ersten Schnapphakenelements 40 bewegt wird.

Der erste Ventilkörper 12, der zweite Ventilkörper 14 und/oder das Aktuatorteil 27 können aus Kunststoff bestehen und mittels Spritzguss herstellt werden. Alternativ können diese Komponenten aus einem Metall, z. B. Aluminium, bestehen. Auch dann können sie mittels Spritzguss beziehungsweise Druckguss herstellt werden.

Da der erste Ventilkörper 12, der zweite Ventilkörper 14 und das Aktuatorteil 27 lediglich ineinandergesteckt werden und keine gegeneinander dichtenden Flächen aufweisen müssen, können die Toleranzen dieser Komponenten groß sein. Dies begünstigt eine kostengünstige Herstellung und Montage dieser Komponenten. Lediglich die dichtenden Flächen zwischen der Zugangsöffnung 16 und dem Verschlussteil 26 müssen innerhalb geringer Toleranzen, insbesondere in Bezug auf die Ebenheit der Dichtfläche, hergestellt werden, um im Sperrzustand eine sichere Abdichtung zu bewirken.

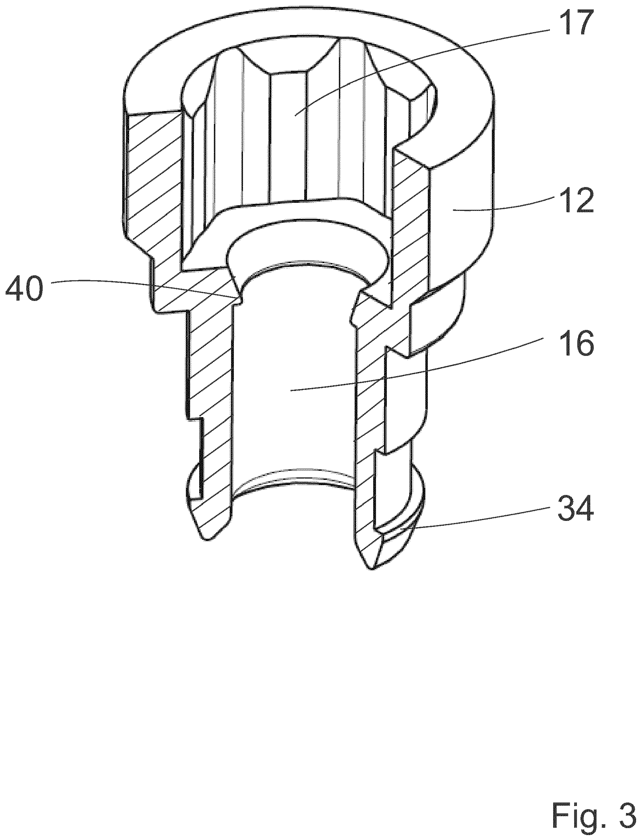

Figur 3 zeigt eine schematische Schnittdarstellung des ersten Ventilkörpers 12 mit der Zugangsöffnung 16 und dem ersten Schnapphakenelement 40. Weiter weist der erste Ventilkörper 12 eine Aufnahme 17 auf, die einen größeren Durchmesser als die Zugangsöffnung 16 umfasst. In der Aufnahme 17 kann der Kopfabschnitt 28 des Aktuatorteils 30 angeordnet werden.

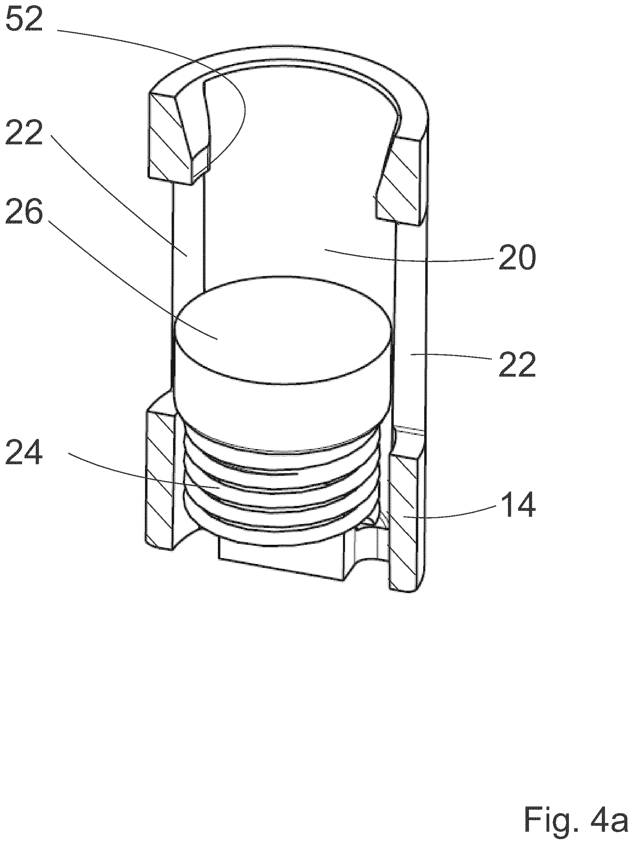

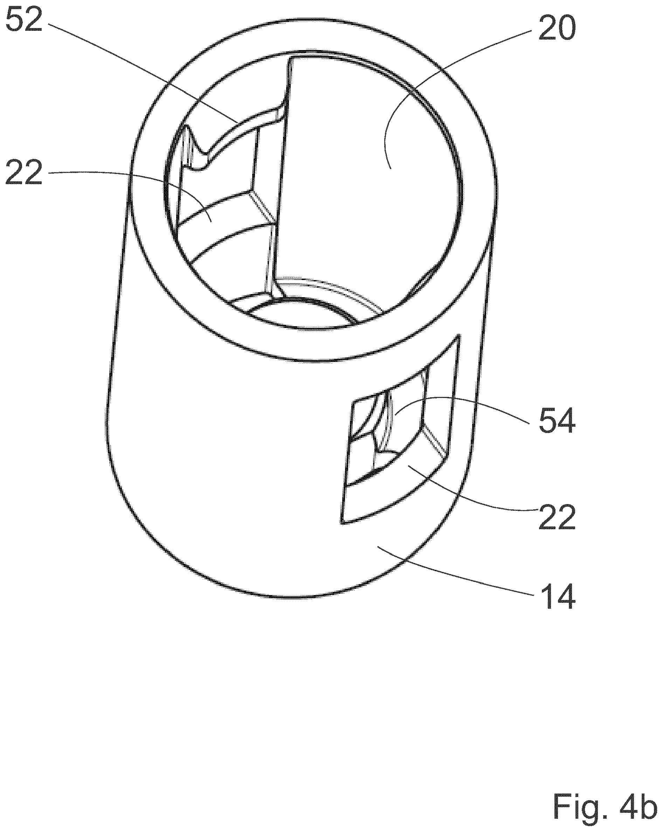

Die Figuren 4a und 4b zeigen den zweiten Ventilkörper 14 mit der Kammer 20, dem zweiten Schnapphakenteil 52 und zwei seitlichen Auslassöffnungen 22.

Weiter ist in Figur 4a das Verschlussteil 26 mit dem Rückstellelement 24 dargestellt. Das Verschlussteil 26 ist im Öffnungszustand dargestellt, wobei eine Kraft auf das Verschlussteil 26 wirkt, die den Widerstand bzw. die Vorspannung des Rückstellelements 24 überwindet.

Figur 4b zeigt den zweiten Ventilkörper 14 aus einer anderen Ansicht. Gut zu sehen ist die Anordnung des zweiten Schnapphakenelements 52 über der seitlichen Auslassöffnung 22. Weiter ist ein Sitz 54 für das Rückstellelement 24 zu sehen, dass als Schraubenfeder ausgebildet sein kann.

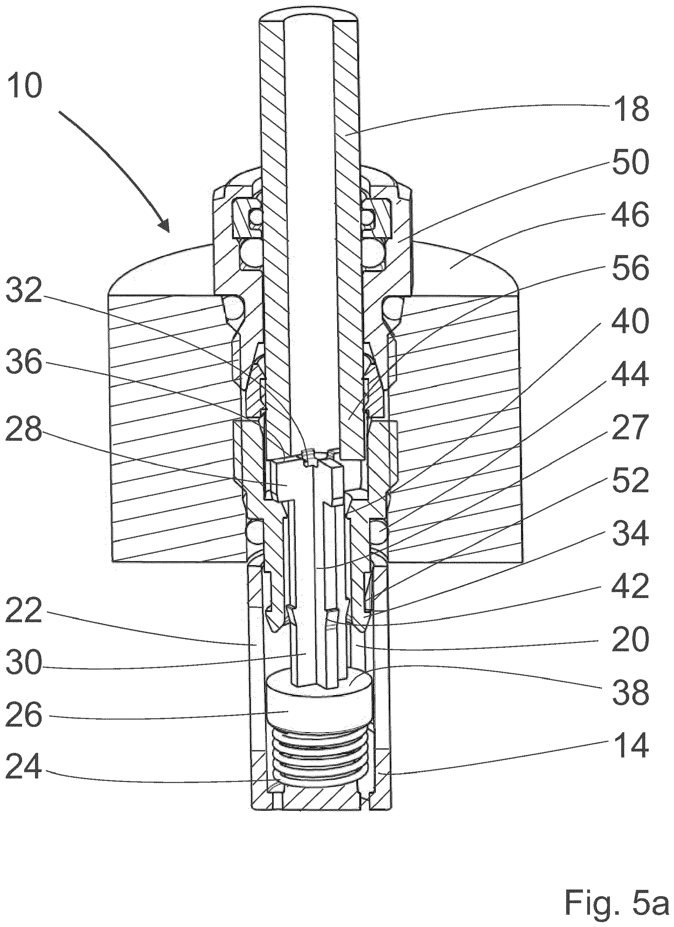

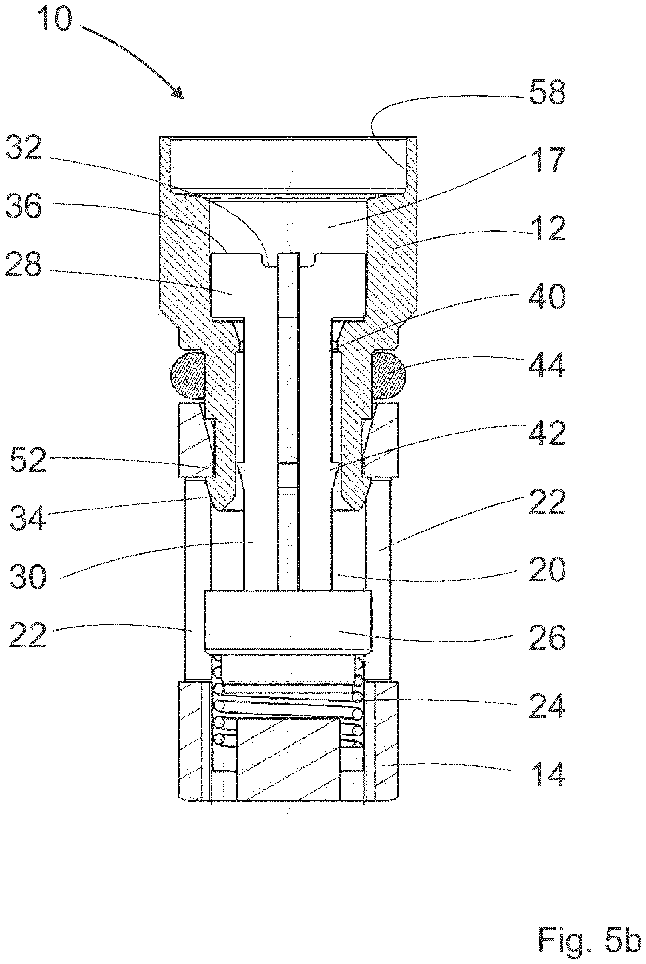

Die Figuren 5a und 5b zeigen ein Druckhalteventil 10 in einem alternativen Ausführungsbeispiel.

Gemäß Figur 5a sind in die Öffnung 48 einer Luftfeder 46 eine Leitungshaltevorrichtung 50 und ein Druckhalteventil 10 angeordnet. Die Leitungshaltevorrichtung 50 ist derart ausgebildet, dass eine Leitung 18 aus der Leitungshaltevorrichtung 50 entfernt werden kann.

Die Fixierung des Druckhalteventils 10 in der Öffnung 48 wird in diesem Beispiel in Richtung der Luftfederkammer 62 mittels des ersten Ventilkörpers 12 bewirkt. In der Gegenrichtung kann das Druckhalteventil 10 in axialer Richtung mittels der Leitungshaltevorrichtung 50 fixiert werden.

In Figur 5b ist das Druckhalteventil 10 dieses Beispiels allein dargestellt. Der erste Ventilkörper 12 umfasst über der Aufnahme 17 eine weitere Aufnahme 58 zum Aufnehmen eines weiteren Dichtelements 60. Das Dichtelement 60 dichtet die Leitung 18 gegen die Leitungshaltevorrichtung 50 und die äußere Umgebung ab.

Die Erfindung ist nicht auf eine der vorbeschriebenen Ausführungsformen beschränkt, sondern in vielfältiger Weise gemäß den Ansprüchen abwandelbar.

### Bezugszeichenliste

- 10: Druckhalteventil
- 12: erster Ventilkörper
- 14: zweiter Ventilkörper
- 16: Zugangsöffnung
- 17: Aufnahme
- 18: Leitung
- 20: Kammer
- 22: seitliche Auslassöffnung
- 24: Rückstellelement
- 26: Verschlussteil
- 27: Aktuatorteil
- 28: Kopfabschnitt
- 30: Schaftabschnitt
- 31: Ausnehmung
- 32: Strömungskanal
- 34: erstes Schnapphakenteil
- 36: Leitungskontaktfläche
- 38: Stoßfläche
- 40: erstes Schnapphakenelement
- 42: zweites Schnapphakenelement
- 44: Dichtelement
- 46: Luftfeder
- 48: Öffnung
- 50: Leitungshaltevorrichtung
- 51: Haltering
- 52: zweites Schnapphakenteil
- 54: Sitz
- 56: Leitungsendstück
- 58: Aufnahme
- 60: Dichtelement
- 62: Luftfederkammer

## Patentansprüche

1. Druckhalteventil für eine Luftfeder (46), wobei das Druckhalteventil (10) umfasst:
- einen ersten Ventilkörper (12) zur Anordnung in eine Öffnung (48) einer Luftfeder (46), wobei der erste Ventilkörper (12) eine Zugangsöffnung (16) aufweist, die fluidkommunizierend mit einer Leitung (18) verbindbar ist;
- einen mit dem ersten Ventilkörper (12) verbundenen zweiten Ventilkörper (14), der eine Kammer (20) umfasst, die fluidkommunizierend mit der Zugangsöffnung (16) verbunden ist und mindestens eine fluidkommunizierend mit einer Luftfeder (46) verbindbare seitliche Auslassöffnung (22) aufweist;
- ein Rückstellelement (24) zum Bereitstellen einer Vorspannung in Richtung der Zugangsöffnung (16), wobei das Rückstellelement (24) außerhalb der Zugangsöffnung (16) in der Kammer (20) angeordnet ist;
- ein in der Kammer (20) angeordnetes Verschlussteil (26); wobei das Verschlussteil (26) aus einem Schließzustand, in dem die Zugangsöffnung (16) verschlossen ist, gegen die Vorspannung in einen Öffnungszustand beweglich ist, in dem die Zugangsöffnung (16) geöffnet ist; und
- ein Aktuatorteil (27) mit einem Kopfabschnitt (28), einem Schaftabschnitt (30), der sich von dem Kopfabschnitt (28) weg erstreckt, und mindestens einem Strömungskanal (32), der sich vom Kopfabschnitt (28) zumindest teilweise entlang des Schaftabschnitts (30) erstreckt, wobei der Kopfabschnitt (28) auf einer von der Kammer (20) weg weisenden Seite der Zugangsöffnung (16) außerhalb der Zugangsöffnung (16) angeordnet ist und einen größeren Durchmesser als die Zugangsöffnung (16) aufweist, wobei der Schaftabschnitt (30) durch die Zugangsöffnung (16) in die Kammer (20) beweglich angeordnet ist und das Aktuatorteil (27) zum Bewegen des Verschlussteils (26) aus dem Schließzustand ausgebildet ist, wenn eine auf den Kopfabschnitt (28) entgegen der Vorspannung wirkende Kraft, die größer als die Vorspannung ist, das Aktuatorteil (27) mit dem Schaftabschnitt (30) aus der Zugangsöffnung (16) in die Kammer (20) bewegt, wobei der Kopfabschnitt (28) mindestens eine Leitungskontaktfläche (36) zum Anlegen eines Leitungsendstücks (56) aufweist, die eine Teilfläche eines Rings ausbildet, wobei der Ring einen größeren Durchmesser aufweist als die Zugangsöffnung (16), und das Druckhalteventil (10) eine Verliersicherung für das Aktuatorteil (27) aufweist, die zum Beschränken einer Bewegbarkeit des Schaftabschnitts (30) in der Zugangsöffnung (16) von der Kammer (20) weg ausgebildet ist, **dadurch gekennzeichnet, dass** die Verliersicherung mindestens ein erstes Schnapphakenelement (40), das an der Zugangsöffnung (16) angeordnet ist, und mindestens ein zweites Schnapphakenelement (42), das am Schaftabschnitt (30) angeordnet ist, aufweist.

2. Druckhalteventil nach Anspruch 1, **dadurch gekennzeichnet, dass** der erste Ventilkörper (12), der zweite Ventilkörper (14) und/oder das Aktuatorteil (27) aus Kunststoff bestehen.

3. Druckhalteventil nach Anspruch 1 oder 2, **dadurch gekennzeichnet, dass** der erste Ventilkörper (12), der zweite Ventilkörper (14) und/oder das Aktuatorteil (27) Spritzgussteile und/oder Druckgussteile sind.

4. Druckhalteventil nach einem der Ansprüche 1 bis 3, **dadurch gekennzeichnet, dass** der erste Ventilkörper (12) und der zweite Ventilkörper (14) mittels einer Schnappverbindung (34, 52) verbunden sind.

5. Druckhalteventil nach einem der Ansprüche 1 bis 4, **dadurch gekennzeichnet, dass** der Schaftabschnitt (30) eine Stoßfläche (38) aufweist, die zum Anlegen an das Verschlussteil (26) ausgebildet ist.

6. Druckhalteventil nach einem der Ansprüche 1 bis 5, **dadurch gekennzeichnet, dass** sich der Strömungskanal (32) außen an dem Aktuatorteil (27) erstreckt.

7. Druckhalteventil nach einem der Ansprüche 1 bis 6, **dadurch gekennzeichnet, dass** das Aktuatorteil (27) vier Strömungskanäle (32) umfasst, die sich außen an dem Aktuatorteil (27) erstrecken und zusammen einen kreuzförmigen Querschnitt aufweisen.

8. Druckhalteventil nach einem der Ansprüche 1 bis 7, **dadurch gekennzeichnet, dass** der erste Ventilkörper (12) ein Dichtelement (44) zur Anlage an einen Wandabschnitt einer Öffnung (48) einer Luftfeder (46) aufweist, das sich außen um den ersten Ventilkörper (12) erstreckt.

9. Luftfeder umfassend eine Luftfederkammer (62) mit einer Öffnung (48), wobei in einem ersten Teil der Öffnung (48), der zu der Luftfederkammer (62) gerichtet ist, ein Druckhalteventil (10) nach einem der vorangegangenen Ansprüche und in einem zweiten Teil der Öffnung (48), der von der Luftfederkammer (62) weg gerichtet ist, eine Leitungshaltevorrichtung (50) angeordnet ist.

10. Luftfeder nach Anspruch 9, **dadurch gekennzeichnet, dass** das Druckhalteventil (10) zumindest teilweise, insbesondere mit mindestens einem Teil des zweiten Ventilkörpers (14), in dem zumindest das Rückstellelement (24) angeordnet ist, in die Luftfederkammer (62) hineinragt.

11. Luftfeder nach Anspruch 9 oder 10, **dadurch gekennzeichnet, dass** das Druckhalteventil (10) durch die Leitungshaltevorrichtung (50) in einer axialen Richtung der Öffnung (48) fixiert ist.

## Claims

1. Pressure retaining valve for an air spring (46), the pressure retaining valve (10) comprising:
- a first valve body (12) for placement in an opening (48) of an air spring (46), the first valve body (12) having an access opening (16) being connectable in fluid communication to a conduit (18);
- a second valve body (14) connected to the first valve body (12), the second valve body (14) comprising a chamber (20) being connected in fluid communication to the access opening (16) and having at least one lateral outlet opening (22) being connectable in fluid communication to an air spring (46);
- a return element (24) for providing a bias in the direction of the access opening (16), the return element (24) being arranged outside the access opening (16) in the chamber (20);
- a closure member (26) disposed in the chamber (20); the closure member (26) being movable against the bias from a closed state in which the access opening (16) is closed to an open state in which the access opening (16) is open; and
- an actuator member (27) having a head portion (28), a shaft portion (30) extending away from the head portion (28), and at least one flow passage (32) extending from the head portion (28) at least partially along the shaft portion (30), the head portion (28) being disposed on a side of the access opening (16) facing away from the chamber (20) outside the access opening (16) and having a larger diameter than the access opening (16), said stem portion (30) being movably disposed into said chamber (20) through said access opening (16), and said actuator member (27) being adapted to move said closure member (26) from said closed state when a force acting on said head portion (28) against said bias is greater than said bias, moves the actuator member (27) with the stem portion (30) out of the access opening (16) into the chamber (20), the head portion (28) having at least one conduit contact surface (36) for abutting a conduit end portion (56) forming a partial surface of a ring, the ring having a larger diameter than the access opening (16), and the pressure retaining valve (10) having an anti-loss device for the actuator member (27), configured to restrict movement of the stem portion (30) in the access opening (16) away from the chamber (20), **characterised in that** the anti-loss device comprises at least a first snap-hook member (40) disposed at the access opening (16) and at least a second snap-hook member (42) disposed at the stem portion (30).

2. Pressure retaining valve according to claim 1, **characterised in that** the first valve body (12), the second valve body (14) and/or the actuator member (27) are made of plastic.

3. Pressure retaining valve according to claim 1 or 2, **characterised in that** the first valve body (12), the second valve body (14) and/or the actuator member (27) are injection moulded parts and/or die cast parts.

4. Pressure retaining valve according to one of claims 1 to 3, **characterised in that** the first valve body (12) and the second valve body (14) are connected by a snap connection (34, 52).

5. Pressure retaining valve according to any one of claims 1 to 4, **characterised in that** the stem portion (30) has an abutment surface (38) adapted to abut the closure member (26).

6. Pressure retaining valve according to one of the claims 1 to 5, **characterised in that** the flow passage (32) extends externally on the actuator member (27).

7. Pressure retaining valve according to one of the claims 1 to 6, **characterised in that** the actuator member (27) comprises four flow passages (32) which extend externally on the actuator member (27), the flow passages together having a cross-shaped cross-section.

8. Pressure retaining valve according to any one of claims 1 to 7, **characterised in that** the first valve body (12) comprises a sealing element (44) for abutment against a wall portion of an opening (48) of an air spring (46) and extending externally around the first valve body (12).

9. Air spring comprising an air spring chamber (62) having an opening (48), wherein a pressure retaining valve (10) according to any one of the preceding claims is arranged in a first part of the opening (48) facing towards the air spring chamber (62) and a line retaining device (50) is arranged in a second part of the opening (48) facing away from the air spring chamber (62).

10. Air spring according to claim 9, **characterised in that** the pressure retaining valve (10) projects at least partially into the air spring chamber (62), in particular with at least a part of the second valve body (14) in which at least the return element (24) is arranged.

11. Air spring according to claim 9 or 10, **characterised in that** the pressure retaining valve (10) is fixed by the line retaining device (50) in an axial direction of the opening (48).

## Revendications

1. Soupape de maintien de pression pour un ressort pneumatique (46), la soupape de maintien de pression (10) comprenant :
- un premier corps de soupape (12) destiné à être placé dans une ouverture (48) d'un ressort pneumatique (46), le premier corps de soupape (12) présentant une ouverture d'accès (16) qui peut être reliée en communication de fluide à un conduit (18) ;
- un deuxième corps de soupape (14) relié au premier corps de soupape (12), qui comprend une chambre (20) qui est reliée en communication de fluide avec l'ouverture d'accès (16) et qui présente au moins une ouverture de sortie latérale (22) pouvant être reliée en communication de fluide avec un ressort pneumatique (46) ;
- un élément de rappel (24) pour fournir une précontrainte en direction de l'ouverture d'accès (16), l'élément de rappel (24) étant disposé à l'extérieur de l'ouverture d'accès (16) dans la chambre (20) ;
- un élément de fermeture (26) disposé dans la chambre (20) ; l'élément de fermeture (26) pouvant être déplacé d'un état fermé, dans lequel l'ouverture d'accès (16) est fermée, à l'encontre de la précontrainte à un état ouvert, dans lequel l'ouverture d'accès (16) est ouverte ; et
- un partie actionneur (27) comprenant une partie de tête (28), une partie de tige (30) s'étendant à partir de la partie de tête (28), et au moins un canal d'écoulement (32) s'étendant à partir de la partie de tête (28) au moins partiellement le long de la partie de tige (30), la partie de tête (28) étant située sur un côté de l'ouverture d'accès (16) orienté à l'opposé de la chambre (20) à l'extérieur de l'ouverture d'accès (16) et ayant un diamètre plus grand que l'ouverture d'accès (16), dans lequel la partie de tige (30) est disposée de manière à pouvoir se déplacer à travers l'ouverture d'accès (16) dans la chambre (20) et la partie d'actionneur (27) est adaptée pour déplacer la partie de fermeture (26) à partir de l'état fermé lorsqu'une force agissant sur la partie de tête (28) à l'encontre de la précontrainte est supérieure à la précontrainte, déplace la partie actionneur (27) avec la partie de tige (30) hors de l'ouverture d'accès (16) dans la chambre (20), la partie de tête (28) ayant au moins une surface de contact de ligne (36) pour l'application d'un embout de ligne (56) formant une surface partielle d'un anneau, l'anneau ayant un diamètre plus grand que l'ouverture d'accès (16), et la soupape de maintien de pression (10) ayant un dispositif anti-perte pour la partie actionneur (27), qui est conçu pour limiter le mouvement de la partie de tige (30) dans l'ouverture d'accès (16) en s'éloignant de la chambre (20), **caractérisé en ce que** le dispositif anti-perte comprend au moins un premier élément de crochet à déclic (40) disposé sur l'ouverture d'accès (16) et au moins un deuxième élément de crochet à déclic (42) disposé sur la partie de tige (30).

2. Soupape de maintien de pression selon la revendication 1, **caractérisée en ce que** le premier corps de soupape (12), le deuxième corps de soupape (14) et/ou l'élément actionneur (27) sont en matière plastique.

3. Soupape de maintien de pression selon la revendication 1 ou 2, **caractérisée en ce que** le premier corps de soupape (12), le deuxième corps de soupape (14) et/ou la partie actionneur (27) sont des pièces moulées par injection et/ou des pièces moulées sous pression.

4. Soupape de maintien de pression selon l'une des revendications 1 à 3, **caractérisée en ce que** le premier corps de soupape (12) et le deuxième corps de soupape (14) sont reliés au moyen d'un assemblage par encliquetage (34, 52).

5. Soupape de maintien de pression selon l'une quelconque des revendications 1 à 4, **caractérisée en ce que** la partie de tige (30) présente une surface de butée (38) configurée pour venir en appui contre l'organe d'obturation (26).

6. Soupape de maintien de pression selon l'une des revendications 1 à 5, **caractérisée en ce que** le canal d'écoulement (32) s'étend à l'extérieur de la partie actionneur (27).

7. Soupape de maintien de pression selon l'une des revendications 1 à 6, **caractérisée en ce que** la partie actionneur (27) comprend quatre canaux d'écoulement (32) s'étendant à l'extérieur de la partie actionneur (27) et présentant ensemble une section transversale en forme de croix.

8. Soupape de maintien de pression selon l'une quelconque des revendications 1 à 7, **caractérisée en ce que** le premier corps de soupape (12) comprend un élément d'étanchéité (44) destiné à venir en contact avec une partie de paroi d'une ouverture (48) d'un ressort pneumatique (46), qui s'étend extérieurement autour du premier corps de soupape (12).

9. Ressort pneumatique comprenant une chambre de ressort pneumatique (62) avec une ouverture (48), dans lequel une soupape de maintien de pression (10) selon l'une des revendications précédentes est disposée dans une première partie de l'ouverture (48) qui est dirigée vers la chambre de ressort pneumatique (62) et un dispositif de maintien de conduite (50) est disposé dans une deuxième partie de l'ouverture (48) qui est dirigée à l'opposé de la chambre de ressort pneumatique (62).

10. Ressort pneumatique selon la revendication 9, **caractérisé en ce que** la soupape de maintien de pression (10) pénètre au moins partiellement dans la chambre de ressort pneumatique (62), en particulier avec au moins une partie du deuxième corps de soupape (14), dans lequel est disposé au moins l'élément de rappel (24).

11. Ressort pneumatique selon la revendication 9 ou 10, **caractérisé en ce que** la soupape de maintien de pression (10) est fixée par le dispositif de maintien de conduite (50) dans une direction axiale de l'ouverture (48).
